**Europäisches Patentamt**

**European Patent Office**

**Office européen des brevets**

(19)

(11) Veröffentlichungsnummer : **0 411 026 B1**

(12) **EUROPÄISCHE PATENTSCHRIFT**

(45) Veröffentlichungstag der Patentschrift :
**17.06.92 Patentblatt 92/25**

(51) Int. Cl.$^5$ : **B60T 8/48**

(21) Anmeldenummer : **89905113.0**

(22) Anmeldetag : **21.03.89**

(86) Internationale Anmeldenummer :
**PCT/EP89/00307**

(87) Internationale Veröffentlichungsnummer :
**WO 89/09711 19.10.89 Gazette 89/25**

(54) **ANTRIEBSSCHLUPFREGELSYSTEM.**

(30) Priorität : **15.04.88 DE 3812569**

(43) Veröffentlichungstag der Anmeldung :
**06.02.91 Patentblatt 91/06**

(45) Bekanntmachung des Hinweises auf die
Patenterteilung :
**17.06.92 Patentblatt 92/25**

(84) Benannte Vertragsstaaten :
**DE FR GB IT SE**

(56) Entgegenhaltungen :
**DE-A- 3 119 803**
**DE-A- 3 703 418**

(73) Patentinhaber : **ROBERT BOSCH GMBH**
**Postfach 30 02 20**
**W-7000 Stuttgart 30 (DE)**

(72) Erfinder : **FRIEDOW, Michael**
**Uracher Weg 9**
**W-7146 Tamm (DE)**

## Beschreibung

<u>Stand der Technik</u>

Die Erfindung geht von einem Antriebsschlupfregelsystem aus wie es z.B. aus dem Produktkatalog "Hydraulik für Fahrzeuge" HB49109DA und aus DE-A-3 119 803 bekannt ist. Das bekannte und das erfindungsgemäße ASR stellen kein komfortables ASR dar, sondern eher eine Anfahrhilfe, um ein Durchdrehen eines Rads zu verhindern und um die Drehzahlen ähnlich wie durch ein Sperrdifferential etwa gleich zu halten.

Das System besteht je nach Bremskreisaufteilung aus zwei Drehzahlsensoren an den beiden Antriebsrädern, ein oder zwei Druckerzeugern, zwei oder drei Magnetventilen und aus einer Elektronikeinheit. Wird beim Anfahren oder im Fahrbetrieb die Drehzahl eines der Antriebsräder um einen bestimmten Betrag höher als die Drehzahl des anderen Antriebrades, so wird durch Absperren der Bremsleitung zwischen Druckerzeuger und Hauptbremszylinder und durch Betätigen des Druckerzeugers das sich schneller drehende und stark schlupfende Rad solange abgebremst, bis der Drehzahlunterschied einen bestimmten. Schwellwert unterschreitet.

Vorteile der Erfindung

Bei dem ASR mit den Merkmalen des Anspruchs 1 ist auch bei einem Fehlverhalten des Systems, nämlich einem Hängenbleiben des Ventils oder einer entsprechenden Fehlansteuerung, sodaß die Bremsleitung trotz Bremsbetätigung aufgetrennt bleibt, sichergestellt, daß Bremsdruck mittels des Hauptbremszylinders auf- und abgebaut werden kann. Dies ist besonders dann zutreffend, wenn der Druckerzeuger keine eigene Fail-safe-Funktion aufweist, was z. B. bei einem Druckerzeuger der Fall ist, bei dem ein Elektromotor über eine Gewindespindel mit Selbsthemmung einen Stellkolben antreibt. Das erfindungsgemäße ASR ist außerdem nachrüstbar.

Figurenbeschreibung

In der Zeichnung sind Ausführungsbeispiele der Erfindung dargestellt.
Es zeigen:
Fig. 1 ein 1. Beispiel eines erfindungsgemäßen ASR,
Fig. 2 einen möglichen Aufbau der Ventilanordnung,
Fig. 3 einen integrierten Aufbau der Ventilanordnung.

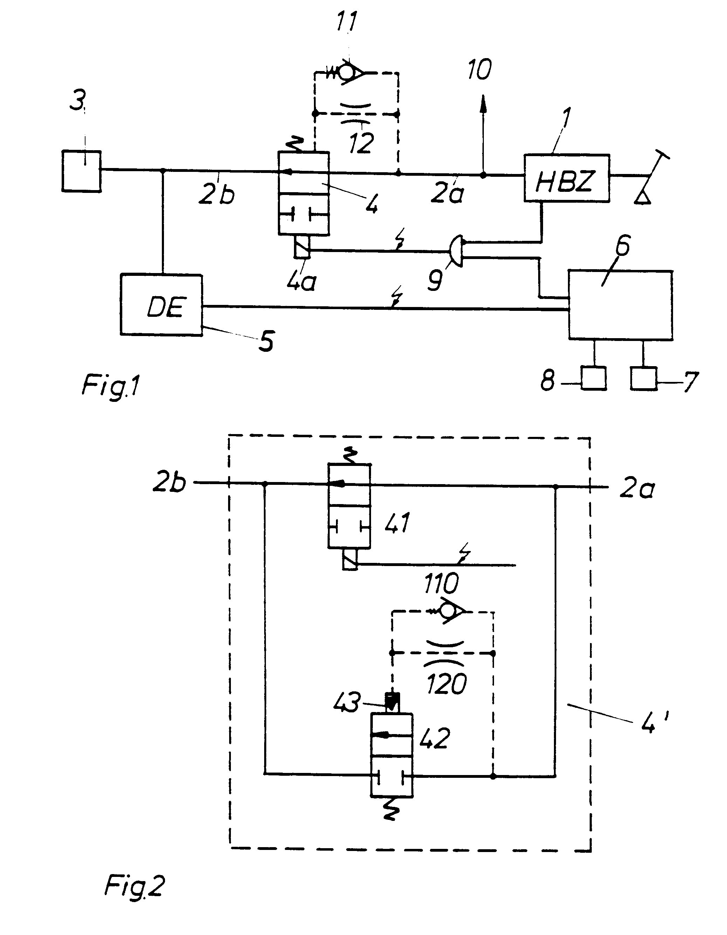

In Fig. 1 ist mit 1 der Hauptbremszylinder eines Fahrzeugs bezeichnet, der über eine Bremsleitung 2a und 2b mit einem Radbremszylinder 3 eines angetriebenen Rads verbunden ist. In die Bremsleitung 2 ist eine Ventilanordnung 4 eingeschaltet. An dem Bremsleitungsteil 2b zwischen der Ventilanordnung 4 und dem Radbremszylinder 3 ist eine Druckerzeuger 5 angeschaltet, der bei Ansteuerung kontinuierlich Druck in dem Abschnitt 2b einsteuert. Z.B. besteht er aus einem Stellkolben, der über eine Gewindespindel von einem Elektromotor verstellt wird.

Von einer Auswertschaltung 6, der die von der Geschwindigkeit der beiden angetriebenen Räder abhängigen Signale von Sensoren 7 und 8 zugeführt werden, wird bei starkem Abweichen der Raddrehzahlen ein Signal über ein Und-Gatter 9 der Magnetwicklung 4a der Ventilanordnung 4 zugeführt; damit wird

die Bremsleitung 2a/2b unterbrochen. Gleichzeitig wird dem Druckerzeuger 5 ein Ausgangssignal der Auswerteschaltung 6 zugeführt, der dann den Druck im Abschnitt 2b kontinuierlich erhöht bis die Drehzahlen angeglichen sind. Die Ventilanordnung 4 bleibt in Trennstellung bis die Antriebsschlupfregelvorgänge abgeschlossen sind. An den Hauptbremszylinder ist bei 10 eine der Anordnung der Komponenten 3, 4 und 5 entsprechende Anordnung für das andere angetriebene Rad angeschaltet (sog. schwarz-weiß Bremskreisaufteilung).

Wird der Hauptbremszylinder betätigt, so wird ein Signal erzeugt, das das Signal zur Ventilanordnung 4 unterbricht und die Bremsleitung 2a/2b wieder durchlässig macht.

Würde das Ventil 4 nicht abfallen oder fälschlicherweise das Signal des Und-Gatters 9 nicht enden, so wäre ein Bremsdruckauf- und Abbau am Rad nicht möglich. Zur Vermeidung dieses Nachteils enthält die Ventilanordnung 4 eine druckabhängige Komponente, die bei Bremsdruckaufbau im Hauptbremszylinder über ein Einrichtungsventil 11 wirksam wird und dann die Ventilanordnung 4 durchlässig macht. Der in der Ventilanordnung hierzu aufgebaute Steuerdruck kann sich bei Erniedrigen des Bremsdrucks nur sehr langsam über eine Drossel 12 abbauen, sodaß er z. B. gegenüber dem noch vorhandenen Ansteuersignal der Magnetwicklung 4a dominant bleibt und die Ventilanordnung durchlässig hält, sodaß auch ein vollständiger Bremsdruckabbau im betreffenden Radbremszylinder ermöglicht wird.

Beim Ausführungsbeispiel der Fig. 2 ist die Ventilanordnung 4′ durch ein Magnetventil 41 und ein druckgesteuertes Ventil 42 gebildet, dessen Steuerkammer 43 über das Einrichtungsventil 110 und die Drossel 120

EP 0 411 026 B1

mit der Bremsleitung 2a verbunden ist.

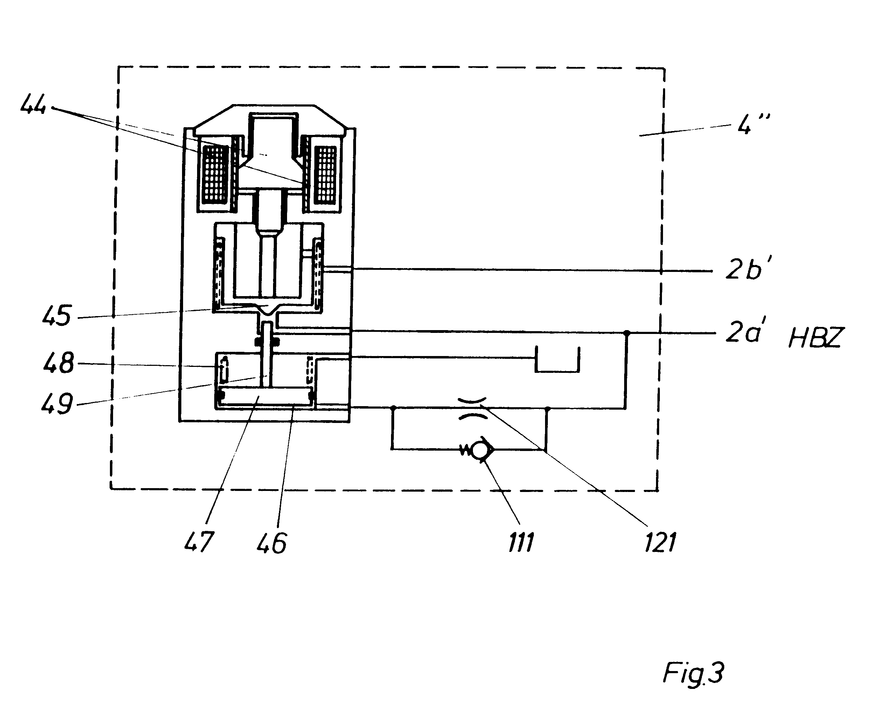

In Fig. 3 ist eine integrierte Ventilanordnung 4″ vorgesehen, bei der ein Elektromagnet 44 bei Ansteuerung einen Ventilkörper 45 betätigt und die Verbindung zwischen den Teilen 2a′ und 2b′ der Bremsdruckleitung unterbricht.Über ein Einrichtungsventil 111 und eine Drossel 121 ist ein Steuerraum 46 mit dem Abschnitt 2a verbunden. Wird in diesem Druck aufgebaut, so wird ein Kolben 47 entgegen der Wirkung einer Feder 48 verschoben; hierdurch wird ein Stößel 49 betätigt, der den Ventilkörper 45 auch bei angesteuertem Elektromagneten 44 von seinem Sitz abheben kann.

**Patentansprüche**

1. Antriebsschlupfregelsystem, bei dem bei Durchdrehgefahr eines angetriebenen Rads 1.) durch eine in die Bremsleitung zwischen der Bremsdruckquelle und dem zugehörigen Radbremszylinder eingeschaltete und elektrisch angesteuerte Ventilanordnung die Bremsleitung aufgetrennt wird und 2.) der Bremsdruck im Bremsleitungsteil zwischen der Ventilanordnung und dem Radbremszylinder kontinuierlich erhöht wird, bis die Durchdrehgefahr des angetriebenen Rads beseitigt ist und bei dem bei Bremsdruckeinsteuerung im Hauptbremszylinder die Auftrennung der Bremsleitung rückgängig gemacht wird, dadurch gekennzeichnet, daß die Ventilanordnung (4; 4′; 4″) neben der Ausbildung als Magnetventil, das die Bremsleitung (2a, 2b) aufgrund eines elektrischen Signals auftrennt, derart ausgebildet ist, daß sie bei Erzeugung eines Bremsdrucks über ein Einrichtungsventil (11; 110; 111) einen Steuerdruck in der Ventilanordnung (4, 4′, 4″) erzeugt, der ein Ventil betätigt, das die Verbindung zwischen Hauptbremszylinder (1) und Radbremszylinder (3) herstellt und daß dieser Steuerdruck nur über eine Drossel (12; 120; 121) abbaubar ist.

2. Antriebsschlupfregelsystem nach Anspruch 1, dadurch gekennzeichnet, daß die Ventilanordnung (4) aus einem Magnetventil (41) und einem dazu parallel liegenden, durch den Steuerdruck gesteuerten Ventil (42) besteht.

3. Antriebsschlupfregelsystem nach Anspruch 1, dadurch gekennzeichnet, daß die Ventilanordnung aus einem Magnetventil (44, 45) besteht, das einen Kolben (47) mit vorgelagerter Steuerkammer (46) enthält, wobei durch Verschiebung des Kolbens (42) das bewegliche Teil (45) des Ventils verschiebbar und das Ventil (45) öffenbar ist.

**Claims**

1. Drive-slip control system in which, in the case of a risk of spinning of a driven wheel 1.) the brake line is divided by an electrically activated valve arrangement inserted into the brake line between the brake-pressure source and the associated wheel-brake cylinder and 2.) the brake pressure in the part of the brake line between the valve arrangement and the wheel-brake cylinder is continuously increased until the risk of spinning of the driven wheel is eliminated, and in which, when brake pressure is fed into the master brake cylinder, the division of the brake line is cancelled, characterised in that, in addition to being designed as a solenoid valve which divides the brake line (2a, 2b) due to an electric signal, the valve arrangement (4; 4′; 4″) is designed in such a way that, when a brake pressure is produced, it produces a control pressure in the valve arrangement (4, 4′, 4″) via a unidirectional valve (11; 110; 111), the said control pressure actuating a valve which establishes the connection between master brake cylinder (1) and wheel-brake cylinder (3), and that this control pressure can only be reduced via a restrictor (12; 120; 121).

2. Drive-slip control system according to Claim 1, characterised in that the valve arrangement (4) consists of a solenoid valve (41) and a valve (42) situated in parallel with the latter and controlled by the control pressure.

3. Drive-slip control system according to Claim 1, characterised in that the valve arrangement consists of a solenoid valve (44, 45) which contains a piston (47) with an upstream control chamber (46), it being possible, by displacing the piston (47), to displace the moveable part (45) of the valve and to open the valve (45).

**Revendications**

1. Système de réglage du glissement de l'entraînement, dans lequel lors d'un risque d'emballement d'une roue entraînée : 1.- la canalisation de freinage est interrompue par un agencement de distributeurs commandé électriquement et branché sur la canalisation de freinage entre la source de pression de freinage et le cylindre de frein de roue correspondant, 2.- la pression de freinage dans la partie de la canalisation de freinage entre l'agencement de distributeurs et le cylindre de frein de roue, est augmentée de façon continue, jusqu'à ce que

3

le risque d'emballement de la roue entraînée soit évité et pour laquelle, lors de l'alimentation en pression du cylindre principal de freinage, l'interruption de la canalisation de freinage est annulée, système de réglage du glissement de l'entraînement caractérisé en ce que l'agencement de distributeurs (4; 4'; 4″) en dehors du fait qu'il est réalisé sous la forme d'un distributeur électromagnétique qui interrompt la canalisation de freinage (2a, 2b) du fait d'un signal électrique, est réalisé de façon que lors de la génération d'une pression de freinage, elle engendre dans l'agencement de distributeurs (4, 4', 4″) par l'intermédiaire d'une soupape unidirectionnelle (11, 110, 111) une pression de commande qui actionne un distributeur établissant la communication entre le cylindre principal de freinage (1) et le cylindre de frein de roue (3) et en ce que cette pression de commande ne peut être supprimée que par l'intermédiaire d'un étranglement (12, 120, 121).

2. Système de réglage du glissement de l'entraînement selon la revendication 1, caractérisé en ce que l'agencement de distributeurs (4) est constitué par un distributeur électromagnétique (41) et un distributeur électromagnétique (42) montée sur elle en parallèle.

3. Système de réglage du glissement de l'entraînement selon la revendication 1, caractérisé en ce que l'agencement de distributeurs est constitué par un distributeur électromagnétique (44, 45) qui comprend un piston (47) avec une chambre de commande (46) placée en amont, et que par déplacement du piston (47), la partie mobile (45) du distributeur est susceptible d'être déplacée et le distributeur (45) ouverte.

Fig.1

Fig.2

*Fig.3*

44

4''

2b'

45

2a'  HBZ

48

49

47   46

111   121

EP 0 411 026 B1

6